# EUROPÄISCHE PATENTANMELDUNG

(11) **EP 1 022 904 A1**
(43) Veröffentlichungstag der Anmeldung: **26.07.2000**
(21) Anmeldenummer: 00250017.1
(22) Anmeldetag: 19.01.2000
(51) Int. Cl.: H04N 7/18

(54) **Anordnung zur Überwachung eines Schaltgerätes mittels einer elektronischen Kamera**

(30) Priorität: 22.01.1999 DE 19903968
(71) Anmelder: SIEMENS AKTIENGESELLSCHAFT, 80333 München (DE)
(72) Erfinder: Baumgarti, Ulrich, 13599 Berlin (DE); Röhl, Wolfgang, 13503 Berlin (DE)

(57) **Zusammenfassung**

Zur Überwachung eines Schaltgerätes (1) mit geschlossenem Gehäuse (2), insbesondere eines Niederspannungs-Leistungsschalters, ist eine elektronische Kamera (21) in Verbindung mit einer geeigneten Lichtquelle (24) vorgesehen. Bildsignale werden digitalisiert und mit vorgegebenen Bildmustern verglichen, um Aufschluß über die Stellung und den Zustand wichtiger Komponenten des Schaltgerätes (1) zu gewinnen. Ein bidirektionales Kommunikationssystem (26) dient zur Übertragung der Ergebnisse der Bildverarbeitung sowie zur Steuerung der elektronischen Kamera (21) und gegebenenfalls der vorgesehenen Lichtquelle (24).

## Beschreibung

Die Erfindung betrifft eine Anordnung zur Überwachung eines Schaltgerätes mittels einer elektronischen Kamera. Eine Anordnung dieser Art ist durch die US 5 805 813 bekannt geworden. Das Schaltgerät ist dabei Bestandteil einer Freiluft-Umspannstation, die eine Vielzahl von Schaltgeräten und anderen Geräten sowie Schalttafeln und ähnliche Ausrüstungsteile umfaßt. Unter anderem werden die Schaltstellungen der Schaltgeräte sowie der Zustand wichtiger Komponenten, wie der Betrieb der Lüfter von Kühleinrichtungen und der Stand von Kühlflüssigkeiten erfaßt. Die von den Kameras erfaßten Bilder bzw. Bildfolgen werden digitalisiert, um wesentliche Bildinhalte in eine direkt verständliche Meldung umzuwandeln. Zusammen mit der Erfassung und Auswertung radiofrequenter und infraroter Strahlung soll die bekannte Anordnung dem in einer entfernten Station tätigen Bedienungspersonal ein Zustandsbild der überwachten Schaltanlage nach der Art der 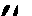 virtuellen Realität" liefern.

Offenbar könnte man daran denken, mit Hilfe einer elektronischen Kamera oder mehrerer solcher Kameras in Verbindung mit Einrichtungen zur digitalen Bildverarbeitung und -Auswertung auch andere Arten von Schaltanlagen zu überwachen, z. B. Mittelspannungs-Schaltanlagen oder Niederspannungs-Schaltanlagen. Jedoch läßt sich in diesen Anlagen kein so umfassendes Bild des Zustandes gewinnen, weil wichtige Komponenten nicht sichtbar sind und daher von einer Kamera nicht beobachtet werden können. Dies gilt insbesondere für Leistungsschalter mit einem geschlossenen Gehäuse und die zugehörigen Trennkontakte bei Einschub-Anlagen.

Der Erfindung liegt die Aufgabe zugrunde, eine Anordnung der eingangs genannten Art so auszubilden, daß sie für Mittel- und Niederspannungs-Schaltanlagen verwendbar ist und ein zuverlässiges Abbild des Zustandes insbesondere von Leistungsschaltern ergibt.

Diese Aufgabe wird gemäß der Erfindung dadurch gelöst, daß bei Verwendung eines Schaltgerätes mit geschlossenem Gehäuse, in dem insbesondere Schaltkontakte und eine Antriebsvorrichtung zur Betätigung der Schaltkontakte untergebracht sind, die elektronische Kamera innerhalb des Gehäuses angeordnet und auf wenigstens eine für die Funktion des Schaltgerätes wesentliche Komponente ausgerichtet ist.

Eine solche Komponente kann z. B. die Schaltwelle sein, deren Stellung als Bindeglied zwischen der Antriebsvorrichtung und den Schaltkontakten einen eindeutigen Hinweis auf die Schaltstellung (AUS oder EIN) des Schaltgerätes liefert. Gleichfalls kann ein zu der Antriebsvorrichtung gehörender Federspeicher überwacht werden, um die Einschaltbereitschaft des Schaltgerätes zu überwachen. Weiterhin kann auf diese Weise die Stellung anderer von außen nicht sichtbarer, aber für die Funktion und Betriebssicherheit des Schaltgerätes wichtiger Bauteile, z. B. von Verklinkungen, erfaßt und ausgewertet werden.

Im Rahmen der Erfindung kann eine Schnittstelle zur Einleitung von der elektronischen Kamera abgegebener Bildsignale in ein zur Steuerung des Schaltgerätes dienendes bidirektionales Kommunikationssystem vorgesehen sein. Da es keiner ständigen bildmäßigen Beobachtung bedarf, ist ein solches Kommunikationssystem in der Lage, die anfallenden Bilddaten zusätzlich zu weiteren Informationen zu übertragen. Ist ein solches Kommunikationssystem, z. B. auf der Basis eines für Schaltanlagen entwickelten Bussystems, vorhanden, so wird demnach eine besondere Übertragungsleitung für Bilddaten nicht benötigt. Eine ganz wesentliche Verringerung der Menge zu übertragender Daten läßt sich nach einer Ausgestaltung der Erfindung in diesem Zusammenhang dadurch erreichen, daß eine Schaltungsanordnung zur Digitalisierung von Bildsignalen und zur Prüfung der digitalisierten Bliddaten auf für den Betrieb des Schaltgerätes relevante Inhalte im Gehäuse des Schaltgerätes angeordnet ist. In diesem Fall werden die erfaßten Bilder digital mit Musterbildern verglichen. Das Ergebnis eines solchen Vergleichs ist eine kurze kodierte Meldung etwa des Inhaltes: "Schaltwelle steht in Stellung AUS".

Für den Betrieb der elektronischen Kamera im Inneren des Schaltgerätes ist eine ausreichende Beleuchtung der zu erfassenden Komponente erforderlich. Hierfür kann dadurch gesorgt werden, daß in dem Gehäuse des Schaltgerätes eine Lichtquelle zur Beleuchtung wenigstens einer zu überwachenden Komponente des Schaltgerätes angeordnet ist. Die Lichtquelle kann insbesondere eine Blitzleuchte sein, die synchron mit der elektronischen Kamera durch einen Steuerbefehl aktivierbar ist. Unter Umständen wird auch zur Erfassung mehrerer Komponenten des Schaltgerätes nur eine Blitzleuchte oder andere Lichtquelle benötigt, da das Licht durch Streuung und Reflexion zu diesen Komponenten gelangen kann.

Die Erfindung ist nicht auf die Überwachung von Komponenten eines Schaltgerätes im Bereich des sichtbaren Lichtes beschränkt. Ist nämlich nach einer Ausgestaltung der Erfindung die elektronische Kamera zur Erfassung von Infrarotstrahlung eingerichtet, so kann insbesondere eine unzulässige Erwärmung einzelner Komponenten festgestellt werden. Gleichfalls kann im Rahmen der Erfindung eine Kamera benutzt werden, die zur Erfassung von Ultraviolettstrahlung eingerichtet ist. Hiermit sind beipielsweise Störlichtbögen, Teilentladungen oder andere gefahrbringende Erscheinungen zuverlässig zu orten. In beiden Fällen - Erfassung von Infrarot- oder Ultraviolettstrahlung - wird keine gesonderte Lichtquelle benötigt.

Für übliche Anforderungen an die Überwachung eines Schaltgerätes wird in der Regel eine einzelne elektronische Kamera in dem Gehäuse des Schaltgerätes ausreichend sein. Sollen jedoch nicht im Blickwinkel einer einzelnen Kamera gelegene Objekte bzw. Komponenten beobachtet werden, so empfiehlt es sich, in dem Gehäuse des Schaltgerätes wenigstens eine weitere elektronische Kamera anzuordnen, die auf eine für die Funktion des Schaltgerätes wesentliche Komponente bzw. Komponenten ausgerichtet ist.

Zu den besonders wichtigen Komponenten eines Schaltgerätes gehören seine Schaltkontakte. Diese bedürfen einer Überwachung, da sie aufgrund der Schaltlichtbögen einem Verschleiß unterliegen. Um die Kosten einer solchen Überwachung gering zu halten, ist es bekannt, anstelle einer visuellen Beurteilung, die eine Außerbetriebnahme und teilweise Zerlegung des Schalterätes erfordert, eine numerische Überwachung durchzuführen. Diese kann im einfachsten Fall durch einen Schaltspielzähler ermöglicht werden. Bessere Ergebnisse werden durch gleichfalls bekannte Systeme ermöglicht, die auf einer bewerteten Summierung der Abschaltströme basieren.

Demgegenüber bietet eine Erfassung des Zustandes der Schaltkontakte mittels einer im Schaltgerät untergebrachten elektronischen Kamera die Möglichkeit einer individuellen und von möglicherweise zu groben oder nicht angepaßten Algorithmen unabhängigen Beurteilung. Im Rahmen der Erfindung kann daher eine elektronische Kamera auf wenigstens einen den Schaltkontakte ausgerichtet sein. Bei Schaltgeräten, die für eine hohe Schaltleistung bemessen sind, können sich in diesem Zusammenhang Schwierigkeiten dadurch ergeben, daß vom Schaltlichtbogen freigesetzte Schaltgase und Metalldampf die elektronische Kamera beaufschlagen und diese nach einiger Zeit die gewünschten Bildsignale nicht mehr liefern kann. Diese Beeinträchtigung hängt stark vom Aufbau der Schaltstrecke und dem sich daraus ergebenden Abstand der Kamera ab. Bei Schaltgeräten mit einer Löschbleche aufweisenden Lichtbogenlöschkammer, wie sie insbesondere bei den meisten Niederspannungs-Leistungsschaltern eingesetzt wird, empfiehlt es sich, die elektronische Kamera außerhalb der Lichtbogenlöschkammer anzuordnen, wobei die Löschbleche fluchtende Öffnungen zur Bildung eines auf einen der Schaltkontakte gerichteten Sichtkanals aufweisen. Bei geeigneter Bemessung der Öffnungen wird eine so starke Dämpfung gegen den Durchtritt von Schaltgasen und Metalldampf erzielt, daß die elektronische Kamera eine befriedigende Betriebsdauer erreicht.

Für die Zwecke der Erfindung geeignete elektronische Kameras sind in sehr geringen Abmessungen verfügbar. Insbesondere sind Kameras mit einem CCD-Element verwendbar, deren zugehörige periphere Schaltkreise auch in einer gewissen Entfernung angeordnet sein können. Gleichfalls geeignet sind Videoschaltkreise in CMOS-Technik, die eine integrierte Kombination bildgebender Baugruppen und sämtlicher zur Ausgabe von verwertbaren Bildsignalen erforderlichen Elementen darstellen.

Die Erfindung wird im folgenden anhand der in den Figuren dargestellten Ausführungsbeispiele näher erläutert.

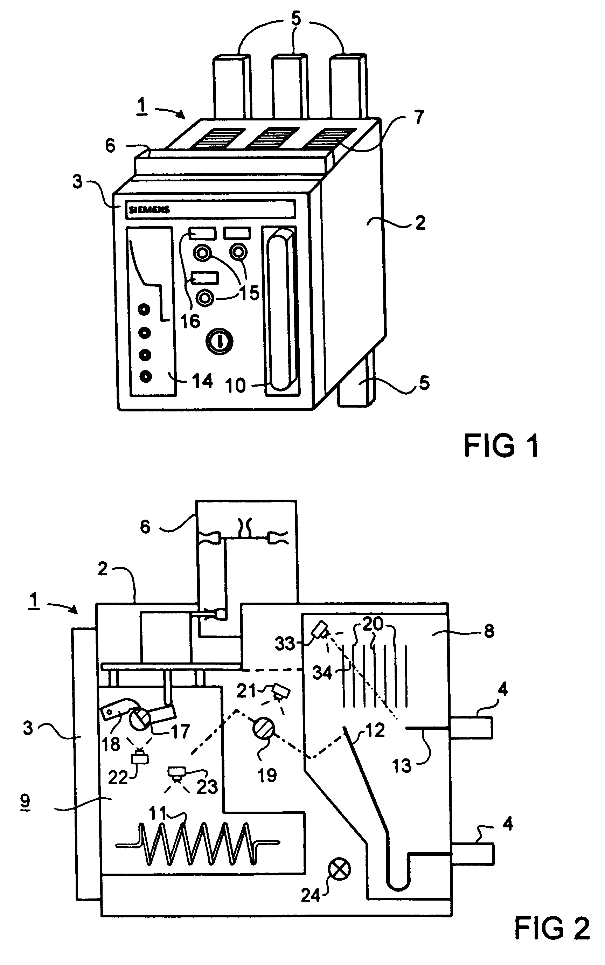

Die Figur 1 zeigt in einer schematisch vereinfachten und perspektivischen Darstellung einen Niederspannungs-Leistungsschalter.

Einen seitlichen Schnitt durch den Niederspannungs-Leistungsschalter gemäß der Figur 1 zur Veranschaulichung wesentlicher Komponenten zeigt die Figur 2.

Die Figur 3 ist ein Blockschaltbild einer Anordnung nach der Erfindung.

In der Figur 4 ist eine Lichtbogenlöschkammer eines Leistungsschalters nach den Figuren 1 und 2 gezeigt, die einen Sichtkanal zur Überwachung eines Schaltkontaktes aufweist.

Das Schaltgerät 1 gemäß der Figur 1 ist ein Niederspannungs-Leistungsschalter mit einem Gehäuse 2, an dessen Frontseite sich ein Bedienpult 3 und an dessen Rückseite sich Anschlußschienen 4 (Figur 2) zur Verbindung mit weiterführenden Stromschienen 5 befinden. An der Oberseite des Gehäuses befindet sich eine Anschlußvorrichtung 6 für Hilfsstromkreise sowie Austrittsöffnungen 7 von Lichtbogenlöschkammern 8 (Figur 2).

Der in der Figur 1 gezeigte Schaltgerät 1 (Niederspannungs-Leistungsschalter) entspricht einer bekannten und verbreiteten Bauform. An dem Bedienungspult 3 sind alle Bedienungsorgane angebracht, die ein Benutzer zur Betätigung und Einstellung des Leistungsschalters 1 benötigt. Insbesondere sind an der rechten Seite ein Betätigungshandgriff 10 zum Spannen eines Federspeichers 11 (Figur 2) angeordnet, der zum Schließen von Schaltkontakten 12 und 13 (Figur 2) freigegeben werden kann. Ferner ist an der linken Seite des Bedienpultes 3 ein elektronischer Überstromauslöser 14 zugänglich, der Einstellorgane für die zum Schutz von Verbrauchern und Leitungen vorgesehenen Parameter gestattet. Im mittleren Feld des Bedienpultes 3 befinden sich Betätigungsorgane 15 und Anzeigeorgane 16 zum Einschalten und Ausschalten des Leistungsschalters 1 und zur Anzeige der Schaltstellung sowie des Zustandes des Energiespeichers 11.

Im folgenden wird hauptsächlich auf die Figur 2 Bezug genommen, um zunächst weitere Komponenten des Schaltgerätes 1 und die zu ihrer Überwachung vorgesehene Anordnung zu erläutern.

Die Schaltkontakte 12 und 13 sind relativ zueinander beweglich angeordnet und stehen hierzu mit einer Antriebsvorrichtung 9 in Verbindung, deren Bestandteil der bereits erwähnte Federspeicher 11 ist. Eine Schaltwelle 19 dient zur Übetragung der Antriebskraft von der Antriebsvorrichtung 9 auf mehrere Paare von Schaltkontakten 12 und 13 des mehrpolig ausgebildeten Schaltgerätes 1. Zur Freigabe der gespeicherten Energie des Federspeichers 11 dient eine Verklinkungseinrichtung, als deren Bestandteile in der Figur 2 schematisch eine Auslösehalbwelle 17 sowie ein Klinkenhebel 18 angedeutet sind.

Die schon erwähnte Lichtbogenlöschkammer 8 weist Löschbleche 20 auf und ist oberhalb der Schaltkontakte 12 und 13 jedes Poles angeordnet.

Um eine umfassende Überwachung des Schaltgerätes 1 zu erreichen, werden in bisher bekannten Leistungsschaltern wichtigen Komponenten, z. B. der Schaltwelle 19, mechanische und/oder elektrische Anzeige- bzw. Signalmittel zugeordnet. Insbesondere wird durch eine zwangsläufig wirkende mechanische Anordnung ein optisches Anzeigeorgan betätigt, das an dem Bedienpult 3 zu den Anzeigeorganen 16 gehört. Ferner wird ein Hilfsschalter betätigt, der an Kontakte der Anschlußvorrichtung 6 geführt ist, um die Schaltstellung elektrisch zu melden.

In der Figur 2 ist ferner dargestellt, wie durch die Anordnung einer oder mehrerer elektronischer Kameras der Zustand wesentlicher Komponenten des Schaltgerätes 1 erfaßt und überwacht werden kann. Als Beispiel für eine solche Anordnung sind eine elektronische Kamera 21 zur Erfassung der Schaltwelle 19, eine elektronische Kamera 22 zur Erfassung der Verklinkungseinrichtung (Auslösehalbwelle 17 und Klinkenhebel 18) sowie eine dritte elektronische Kamera 23 zur Erfassung des Energiespeichers 11 vorgesehen. Ferner ist in dem Gehäuse 2 des Leistungsschalters 1 eine Blitzleuchte 24 angeordnet, die für eine ausreichende Helligkeit im Inneren des Schaltgerätes 1 sorgt. In dem vorliegenden Beispiel wird davon ausgegangen, daß eine einzige Blitzleuchte 24 ausreicht, da die von den elektronischen Kameras 21, 22 und 23 benötigte Helligkeit relativ gering ist und durch Streuung und Reflexion im Inneren des Gehäuses 2 eine mehr oder weniger gleichmäßige Lichtverteilung erreicht wird. Es hängt jedoch von dem inneren Aufbau des jeweils vorliegenden Schaltgerätes ab, ob es zweckmäßig ist, eine andere Anzahl und Anordnung von Lichtquellen vorzusehen.

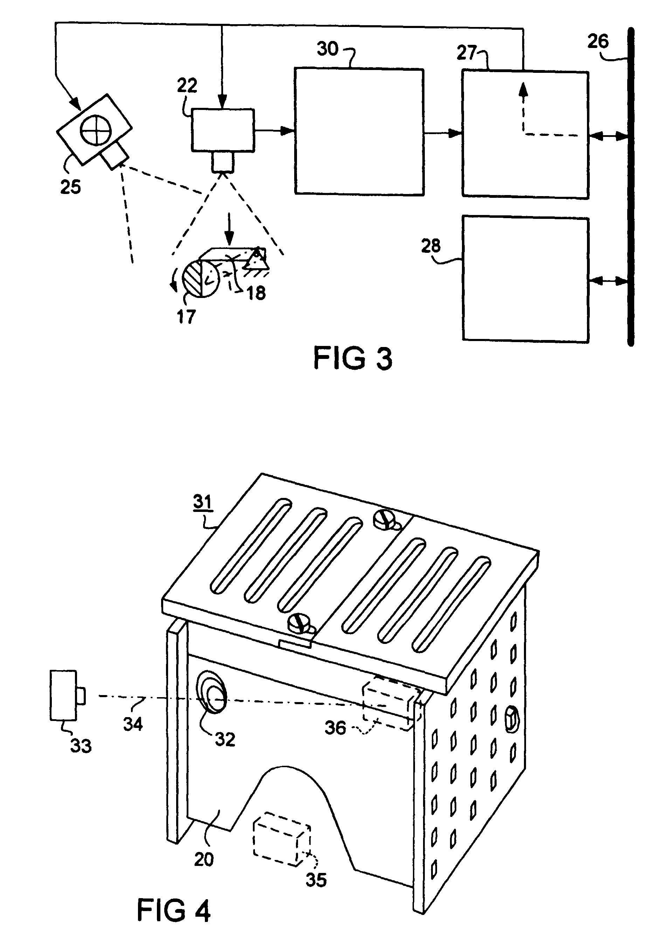

Das Zusammenwirken der elektronischen Kameras und zugehöriger Baugruppen ist in dem Blockschaltbild gemäß der Figur 3 veranschaulicht. Als Beispiel ist hier die zur Erfassung der Verklinkungseinrichtung (Auslösehalbwelle 17 und Klinkenhebel 18) vorgesehene elektronische Kamera 22 und eine der Kamera 22 zugeordnete Lichtquelle 25 dargestellt. Über ein Kommunikationssystem 26 (Steuerbus), das mit dem Schaltgerät 1 (Figuren 1 und 2) zweckmäßig mittels der Anschlußvorrichtung 6 gekoppelt ist, steht eine das Busmodul ausgebildete Schnittstelle 27 in Verbindung, der über das Kommunikationssystem 26 übertragene Signale in Steuerbefehle zur Betätigung der elektronischen Kamera 22 und der Lichtquelle 25 umsetzt. Von der elektronischen Kamera 22 abgegebene Bildsignale gelangen zunächst zu einer Steuereinheit 30, welche die Bildsignale bearbeitet und mit vorgegebenen bzw. gespeicherten Bildmustern vergleicht. Das Ergebnis dieser digitalen Bildverarbeitung beispielsweise in der Form "verklinkt" und "gelöst" gelangt wiederum zu der als Busmodul ausgebildeten Schnittstelle 27 zur Übergabe an das Kommunikationssystem 26. Über dieses gelangt die betreffende Information zu dem gewünschten Ort, z. B. einer zentralen Schaltwarte 28.

Wie anhand der Figur 3 leicht zu erkennen ist, können mittels der Schnittstelle 27 und der Steuereinheit 30 auch mehrere elektronische Kameras zur gleichen Zeit oder zu gewünschten Zeitpunkten betätigt werden, um die erforderlichen Überwachungen in dem Schaltgerät 1 durchzuführen. Dies gilt gleichermaßen, wenn anstelle von Kameras, die im Bereich des sichtbaren Lichtes arbeiten, solche für das infrarote oder ultraviolette Spektrum eingesetzt werden.

Einen Sonderfall bildet die Überwachung der Schaltkontakte 12 und 13 (Figur 2) insofern, als hier mit Rücksicht auf die von Schaltlichtbögen ausgehenden Wirkungen eine elektronische Kamera nicht in unmittelbarer Nähe angeordnet werden kann. Die Figur 4 veranschaulicht eine zweckmäßige Lösung für diese Schwierigkeit. In diesem Ausführungsbeispiel sind mehrere Löschbleche 20 zu einem Löschkammereinsatz 31 zusammengefügt. Fluchtende Öffnungen 32 in den Löschblechen 20 bilden einen Sichtkanal für eine elektronische Kamera 33, dessen Sichtachse 34 auf einen der Schaltkontakte in dessen geöffneter Stellung gerichtet ist. Dies ist in der Figur 4 durch gestrichelt gezeigte Kontaktauflagen 35 und 35 angedeutet, deren Zustand im vorliegenden Zusammenhang besonders interessiert. Obwohl im allgemeinen beide zusammenwirkenden Kontaktauflagen den gleichen Zustand aufweisen, kann daran gedacht werden, durch eine entsprechende Anordnung von Durchgangsöffnungen eine auf den verbleibenden Schaltkontakt gerichtete Sichtachse zu schaffen, falls betriebliche Erfahrungen oder die Wahl unterschiedlicher zusammenwirkender Kontaktmaterialien Anlaß für eine solche zusätzliche Überwachung gibt. Durch die Anordnung der Durchgangslöcher wird die zugeordnete elektronische Kamera vor der Einwirkung von Schaltgasen geschützt.

## Patentansprüche

1. Anordnung zur Überwachung eines Schaltgerätes (1) mittels einer elektronischen Kamera (21, 22, 23, 33),
**dadurch gekennzeichnet, daß**
bei Verwendung eines Schaltgerätes (1) mit geschlossenem Gehäuse (2), in dem insbesondere Schaltkontakte (12, 13) und eine Antriebsvorrichtung (9) zur Betätigung der Schaltkontakte (12, 13) untergebracht sind, die elektronische Kamera (21, 22, 23, 33) innerhalb des Gehäuses (2) angeordnet und auf wenigstens eine für die Funktion des Schaltgerätes (1) wesentliche Komponente ausgerichtet ist.

2. Anordnung nach Anspruch 1,
**dadurch gekennzeichnet, daß**
eine Schnittstelle (27) zur Einleitung von der elektronischen Kamera (21, 22, 23, 33) abgegebener Bildsignale in ein zur Steuerung des Schaltgerätes dienendes bidirektionales Kommunikationssystem (26) vorgesehen ist.

3. Anordnung nach Anspruch 1 oder 2,
**dadurch gekennzeichnet, daß**
eine Schaltungsanordnung (30) zur Digitalisierung von Bildsignalen und zur Prüfung der digitalisierten Bilddaten auf für den Betrieb des Schaltgerätes (1) relevante Inhalte im Gehäuse (2) des Schaltgerätes (1) angeordnet ist.

4. Anordnung nach einem der vorangehenden Ansprüche,
**dadurch gekennzeichnet, daß**
in dem Gehäuse (2) des Schaltgerätes (1)eine Lichtquelle (24) zur Beleuchtung wenigstens einer zu überwachenden Komponente des Schaltgerätes (1) angeordnet ist.

5. Anordnung nach Anspruch 4,
**dadurch gekennzeichnet, daß**
die Lichtquelle eine Blitzleuchte (25) ist und daß die elektronische Kamera (22) und die Blitzleuchte (25) synchron durch einen Steuerbefehl auslösbar sind.

6. Anordnung nach einem der vorangehenden Ansprüche,
**dadurch gekennzeichnet, daß**
die elektronische Kamera zur Erfassung von Infrarotstrahlung eingerichtet ist.

7. Anordnung nach einem der vorangehenden Ansprüche,
**dadurch gekennzeichnet, daß**
die elektronische Kamera zur Erfassung von Ultraviolettstrahlung eingerichtet ist.

8. Anordnung nach einem der vorangehenden Ansprüche,
**dadurch gekennzeichnet, daß**
in dem Gehäuse (2) des Schaltgerätes (1) wenigstens eine weitere elektronische Kamera (22, 23, 33) angeordnet und auf eine für die Funktion des Schaltgerätes wesentliche Komponente bzw. Komponenten ausgerichtet ist bzw. sind.

9. Anordnung nach einem der vorangehenden Ansprüche,
**dadurch gekennzeichnet, daß**
die elektronische Kamera (33) auf wenigstens einen der Schaltkontakte (12, 23) des Schaltgerätes (1) gerichtet ist.

10. Anordnung nach Anspruch 9,
**dadurch gekennzeichnet, daß**
bei einem Schaltgerät (1) mit einer Löschblech (20) aufweisenden Lichtbogenlöschkammer (8) zur Aufnahme eines bei einer Trennung der Schaltkontakte (12, 13) auftretenden Schaltlichtbogens wenigstens eine elektronische Kamera (33) außerhalb der Löschkammer (8) angeordnet ist und daß die Löschbleche (20) fluchtende Öffnungen (32) zur Bildung eines auf einen der Schaltkontakte (12, 13) gerichteten Sichtkanals aufweisen.

11. Anordnung nach einem der vorangehenden Ansprüche,
**dadurch gekennzeichnet, daß**
die elektronische Kamera ein CCD-Element und zugehörige periphere Schaltkreise umfaßt.

12. Anordnung nach einem der vorangehenden Ansprüche,
**dadurch gekennzeichnet, daß**
die elektronische Kamera als bildgebendes Element einen integrierten CMOS-Video-Schaltkreis aufweist.
